# EUROPÄISCHE PATENTANMELDUNG

(11) **EP 3 783 530 A1**
(43) Veröffentlichungstag der Anmeldung: **24.02.2021**
(21) Anmeldenummer: 20189297.3
(22) Anmeldetag: 04.08.2020
(51) Int. Cl.: G06K 9/00

(54) **VERFAHREN ZUR KOLLISIONSPRÄVENTION**

(30) Priorität: 23.08.2019 DE 102019212667
(71) Anmelder: VOLKSWAGEN AG, 38440 Wolfsburg (DE)
(72) Erfinder: Gohlke, Daniel, 38553 Wasbüttel (DE); Milch, Stefan, 38162 Hemkenrode (DE)

(57) **Zusammenfassung**

Die Erfindung betrifft ein Verfahren zur Prävention einer Kollision eines Fahrzeugs (10) mit einem Objekt (22).

Es ist vorgesehen, dass der von einem erkannten Objekt (22) eingenommene Raumbereich virtuell erweitert (30; 32) und als Teil des erkannten Objekts (22) behandelt wird.

## Beschreibung

Die Erfindung betrifft ein Verfahren zur Kollisionsprävention gemäß dem Oberbegriff des Patentanspruchs 1, ein Fahrerassistenzsystem gemäß dem Oberbegriff des Patentanspruchs 7 und ein Fahrzeug gemäß dem Oberbegriff des Patentanspruchs 9.

Auf dem technischen Gebiet der Fahrzeuge, insbesondere Kraftfahrzeuge, ist eine zunehmende Tendenz zur Automatisierung zu verzeichnen.

Stand der Technik sind heute Fahrerassistenzsysteme, die vielfältige teilautomatisierte und bereits auch vollautomatisierte Fahraufgaben übernehmen können. Testweise sind gar vollautonome Fahrzeuge bereits im Einsatz, bei denen die Fahrerassistenzsysteme alle anfallenden Fahraufgaben übernehmen können.

Im Bereich der Notbremsassistenten ist es bekannt, zur Kollisionsvorhersage die aktuelle Bewegung des Fahrzeugs in die Zukunft zu prädizieren und zu prüfen, ob diese prädizierte Trajektorie nicht zu einer Kollision mit anderen Objekten führt.

Die anderen Objekte werden dabei auch entsprechend ihrer aktuellen Bewegung weiterprädiziert.

Bei der Prädiktion wurden bisher nur die bekannten Egoausdehnungen und falls bekannt die Objektausdehnung berücksichtigt.

Für Fahrerassistenzfunktionen, deren Wirkbereich beispielsweise in einem Straßenkreuzungsumfeld liegt, ist diese Modellierung jedoch nicht mehr zufriedenstellend, da in solchen Umfeldern das Kollisionsrisiko erhöht ist.

Aus der DE 10 2011 109 697 A1 ist beispielsweise ein Verfahren zur Kollisionserkennung zwischen Fahrzeugen bekannt, in dem Länge und Breite eines entgegenkommenden Fahrzeugs ermittelt werden und die Bewegung des eigenen Fahrzeugs und des entgegenkommenden Fahrzeugs extrapoliert werden.

Die DE 20 2013 008 112 U1 beschreibt ein weiteres Verfahren, in dem ermittelt wird, ob ein anderes Fahrzeug im Begriff ist, ein Abbiegemanöver zu vollziehen. Falls dem so ist, wird weiterhin ermittelt, ob das eigene Fahrzeug noch einen ausreichenden Mindestabstand zu dem abbiegenden Fahrzeug hat.

Aus der DE 10 2017 205 737 A1 ist eine Vorrichtung zur Kollisionsvermeidung zwischen einem abbiegenden Fahrzeug und dem Gegenverkehr bekannt. Dabei wird eine Kollisionswahrscheinlichkeit auf Basis der Bewegungen der beiden Fahrzeuge und einer unterstellten Verzögerung des Gegenverkehrs ermittelt.

Der Erfindung liegt nun die Aufgabe zugrunde, eine technische Lösung zur Kollisionsprävention zu schaffen, die eine erhöhte Sicherheit gewährleistet.

Die Aufgabe wird durch die Gegenstände der unabhängigen Patentansprüche 1, 7 und 9 gelöst. Weitere bevorzugte Ausgestaltungen der Erfindung ergeben sich aus den übrigen, in den Unteransprüchen und der Beschreibung genannten Merkmalen.

Ein erster Aspekt der Erfindung betrifft ein Verfahren zur Kollisionsprävention eines Fahrzeugs, umfassend folgende Schritte:
- Durchführung einer Objekterkennung und Ermittlung einer Momentanbewegung eines erkannten Objekts;
- Prädiktion der Bewegung des erkannten Objekts und der Eigenbewegung des Fahrzeugs;
- Prüfung der prädizierten Bewegung und prädizierten Eigenbewegung auf Überschneidungen; und
- Durchführung einer Präventionsreaktion, wenn eine Überschneidung erkannt wird.

Erfindungsgemäß ist vorgesehen, dass ein Sicherheitsbereich zumindest abschnittsweise um das erkannte Objekt herum definiert wird, der als zu dem erkannten Objekt gehörig bei der Prädiktion der Bewegung des erkannten Objekts mit diesem mitbewegt wird, und dass bereits eine Überschneidung der prädizierten Eigenbewegung des Fahrzeugs mit der prädizierten Bewegung des Sicherheitsbereichs die Präventionsreaktion auslöst.

Mit anderen Worten wird in dem erfindungsgemäßen Verfahren der vom erkannten Objekt eingenommene Raumbereich virtuell erweitert und als Teil des erkannten Objekts behandelt. Bei der virtuellen Erweiterung des Raumbereichs ist der Fachmann grundsätzlich frei. Es wird dabei auf Basis der hierin offenbarten technischen Lehre unter Berücksichtigung der Art eines beispielsweise Fahrerassistenzsystems zur Durchführung des Verfahrens sowie sicherheitsrelevanter Fahrsituationen einen zweckmäßigen Sicherheitsbereich festlegen.

Der Sicherheitsbereich kann beispielsweise in Richtung der Bewegung des erkannten Objekts vor dem Objekt angeordnet sein. Auch kann der Sicherheitsbereich das erkannte Objekt vollständig umgeben. Ferner sind Ausprägungen des Sicherheitsbereichs denkbar, die zwischen den zuvor beschriebenen Ausprägungen liegen.

Um unangemessene Präventionsreaktionen zu vermeiden, kann der Sicherheitsbereich mit zunehmendem Zeithorizont der Prädiktion der Bewegung des erkannten Objekts kleiner werden. Ab einem definierbaren Zeithorizont kann dieser auch komplett weggelassen werden.

Beiden vorteilhaften Ausgestaltungen des Verfahrens der Erfindung liegt die Annahme zugrunde, dass ab einem gewissen Abstand des Fahrzeugs und des erkannten Objekts die Kollisionsgefahr sinkt, bis sie vernachlässigbar ist. Außerdem wird die Genauigkeit in der Prädiktion der Bewegung des erkannten Objekts mit zunehmendem Abstand immer kleiner, so dass die Definition des Sicherheitsbereichs ab einem gewissen Abstand keinen sicherheitstechnischen Sinn mehr ergibt. Hingegen kann die zur Simulation des Sicherheitsbereichs erforderliche Rechenleistung reduziert werden.

In bevorzugter Ausgestaltung des Verfahrens der Erfindung ist vorgesehen, dass die Objekterkennung unter Ermittlung einer Ausdehnung des erkannten Objekts erfolgt.

Sensoren des Fahrzeugs, beispielsweise Kameras, Radare oder Abstandssensoren, können die Geometrie des erkannten Objekts genau bestimmen. Dies ermöglicht eine zweckmäßige Gestaltung des Sicherheitsbereichs in Bezug auf die tatsächliche Objektgeometrie. Die Genauigkeit der Messung ist von Sensor zu Sensor unterschiedlich. Vorzugsweise werden Kameras oder auch Lidar-Systeme eingesetzt, da sie genauer sind, als Radar oder Ultraschall, um eine Geometrie zu erkennen.

In weiterhin bevorzugter Ausgestaltung des Verfahrens der Erfindung ist vorgesehen, dass der Sicherheitsbereich in Abhängigkeit einer Charakteristik der Momentanbewegung des erkannten Objekts definiert wird.

Die Charakteristik kann beispielsweise die Geschwindigkeit und deren Änderung umfassen. Somit lassen sich erkannte Objekte in risikoreichere und risikoärmere Objekte klassifizieren und der Sicherheitsbereich lässt sich zweckmäßig darauf anpassen.

So ist in weiterhin bevorzugter Ausgestaltung des Verfahrens der Erfindung vorgesehen, dass eine Größe des definierten Sicherheitsbereichs zunimmt, wenn die Momentanbewegung des erkannten Objekts schneller wird.

Da von einem schnellen Objekt ein größeres Risiko ausgeht, beispielsweise an einer Straßenkreuzung oder beim Abbiegen durch den Gegenverkehr, ist ein größerer Sicherheitsbereich geboten. Bei einem langsameren Objekt, bis hin zu einem unbewegten Objekt, kann der Sicherheitsbereich kleiner ausfallen. Bei einem unbewegten Objekt kann er auf einen Minimalsicherheitsbereich reduziert sein. Dieser kann auch gemäß der Möglichkeit, dass das unbewegte Objekt sich in Bewegung setzt, gegenüber einem permanent statischen Objekt vergrößert sein. Die konkrete Auslegung obliegt hier dem zuständigen Fachmann.

In weiterhin bevorzugter Ausgestaltung des Verfahrens der Erfindung ist vorgesehen, dass eine Größe des definierten Sicherheitsbereichs in Abhängigkeit einer Dynamik der Charakteristik der Momentanbewegung des erkannten Objekts verändert wird.

Mit anderen Worten hängt die Größe des Sicherheitsbereichs davon ab, wie häufig und wie schnell sich die Momentanbewegung verändert. Im Falle beispielsweise eines häufig beschleunigten Objekts, das beispielsweise auch seine Richtung häufig ändert, kann ein größerer Sicherheitsbereich geboten sein, um die vorliegende Unberechenbarkeit zu kompensieren. Dies ist beispielsweise bei autonomen Fahrzeugen anzustreben, um eine größtmögliche Sicherheit zu gewährleisten.

Bei beispielsweise manuell gefahrenen Fahrzeugen kann hingegen auch eine Verkleinerung des Sicherheitsbereichs geboten sein, um den Fahrer nicht unnötig durch beispielsweise Fehlwarnungen abzulenken. Dies kann beispielsweise der Fall sein, wenn das Objekt durch dynamisches Verhalten beispielsweise mehrfach nur kurzzeitig zu einer Überschneidung führt. Dies kann in Kauf genommen werden, wenn bei manuell gefahrenen Fahrzeugen die Momentanbewegung des Objekts ausreichend genau bestimmt werden kann, so dass die kurzzeitig zugelassene Überschneidung immer noch eine rechtzeitige Präventionsreaktion zulässt.

Der zuständige Fachmann kann auf Basis der hierin offenbarten Lehre selbstständig festlegen, wie die Größe des Sicherheitsbereichs für ein bestimmtes Fahrzeug in Abhängigkeit der Dynamik des erkannten Objekts verändert werden soll.

In weiterhin bevorzugter Ausgestaltung des Verfahrens der Erfindung ist vorgesehen, dass die Präventionsreaktion ein Element aus folgender Gruppe umfasst: optisches Warnsignal; akustisches Warnsignal; fahrdynamisches Warnsignal; Geschwindigkeitsreduktion; Notbremsung.

Als fahrdynamisches Warnsignal kommt beispielsweise ein Bremsruck in Betracht. Die Präventionsreaktionen können in der genannten Reihenfolge als Präventionsreaktionen zunehmender Intensität angesehen werden und je nach Fahrsituation zweckmäßig ausgewählt werden.

Ein weiterer Aspekt der Erfindung betrifft ein Fahrerassistenzsystem, ausgebildet zur Durchführung eines erfindungsgemäßen Verfahrens gemäß der vorhergehenden Beschreibung.

In bevorzugter Ausgestaltung des Fahrerassistenzsystems der Erfindung ist vorgesehen, dass das Fahrerassistenzsystem einen Kreuzungsassistenten oder Abbiegeassistenten umfasst.

In solchen Bereichen kommt der Kollisionsprävention eine besonders große Bedeutung zu.

Ein weiterer Aspekt der Erfindung betrifft ein Fahrzeug, umfassend ein erfindungsgemäßes Fahrerassistenzsystem gemäß der vorhergehenden Beschreibung.

Das Fahrzeug kann vorzugsweise ein Kraftfahrzeug sein, insbesondere ein Automobil oder Lastkraftwagen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnung erläutert. Es zeigt:

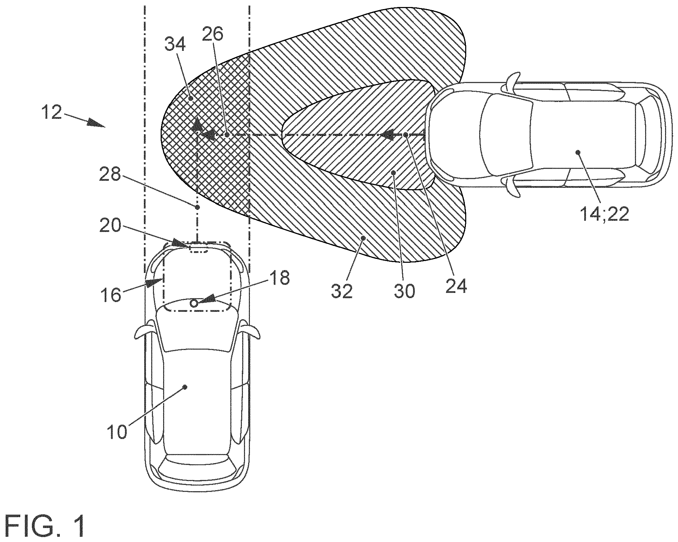

Figur 1 ein erfindungsgemäßes Fahrzeug in einem erfindungsgemäßen Verfahren.

Figur 1 zeigt ein erfindungsgemäßes Fahrzeug 10, das sich an einer nicht weiter dargestellten Straßenkreuzung 12 befindet.

Das Fahrzeug 10 bewegt sich dabei in Figur 1 von unten nach oben. Bezogen auf das Fahrzeug 10 von rechts kommend, bewegt sich auch ein weiteres Fahrzeug 14 auf die Straßenkreuzung 12 zu.

Das erfindungsgemäße Fahrzeug 10 ist mit einem erfindungsgemäßen Fahrerassistenzsystem 16 ausgestattet, das die folgenden Schritte eines erfindungsgemäßen Verfahrens durchführen kann.

Zunächst führt das Fahrerassistenzsystem 16 eine Objekterkennung durch, beispielsweise auf Basis einer Kamera 18 und eines Radarsensors 20. Dabei ermittelt es das weitere Fahrzeug 14 als erkanntes Objekt 22. Im Wege der Objekterkennung erfolgt auch eine Ermittlung einer Ausdehnung des erkannten Objekts 22.

Im Folgenden ermittelt das Fahrerassistenzsystem 16 eine Momentanbewegung 24 des erkannten Objekts 22. Ferner prädiziert das Fahrerassistenzsystem 16 die Bewegung 26 des erkannten Objekts 22 und seine Eigenbewegung 28 beziehungsweise die des Fahrzeugs 10.

Auf dieser Basis erfolgt eine Prüfung der prädizierten Bewegung 26 und der prädizierten Eigenbewegung 28 auf Überschneidungen 34.

Zu diesem Zweck wird ein Sicherheitsbereich 30 definiert, der sich im vorliegenden Beispiel vor dem Fahrzeug 14 und auf Basis der erkannten Ausdehnung auch abschnittsweise um das weitere Fahrzeugs 14 herum verläuft.

Bei der Prädiktion der Bewegung 26 des erkannten Objekts 22 beziehungsweise weiteren Fahrzeugs 14 wird der Sicherheitsbereich 30 als Teil des erkannten Objekts 22 behandelt. Entsprechend wird der Sicherheitsbereich 30 bei der Prädiktion mit dem weiteren Fahrzeug 14 virtuell mit diesem mitbewegt.

Bei der Prüfung der prädizierten Bewegung 26 und der prädizierten Eigenbewegung 28 auf Überschneidungen 34 wird dann bereits eine Überschneidung 34 der prädizierten Eigenbewegung 28 des Fahrzeugs 10 mit der prädizierten Bewegung 26 des Sicherheitsbereichs 30 berücksichtigt.

Liegt eine solche Überschneidung 34 vor, wird eine Präventionsreaktion auslöst.

In gezeigten Fall mit dem Sicherheitsbereich 30 wird keine Überschneidung 34 erkannt. Folglich wird auch keine Präventionsreaktion hervorgerufen. Dies kann beispielsweise darauf beruhen, dass das Fahrzeug 10 sich schnell genug bewegt, um ohne Überschneidungen 34 mit dem Sicherheitsbereich 30 die Straßenkreuzung 12 zu passieren.

Ein anderer Fall wird im Folgenden anhand eines Sicherheitsbereichs 32 erläutert, der sich von dem Sicherheitsbereich 30 unterscheidet.

Es ist gut erkennbar, dass der Sicherheitsbereichs 32 deutlich größer ist, als der Sicherheitsbereich 30. Dies beruht darauf, dass der Sicherheitsbereich 30, 32 in Abhängigkeit einer Charakteristik der Momentanbewegung 24 des erkannten Objekts 22 definiert wird.

Dem Sicherheitsbereichs 32 liegt exemplarisch eine Momentanbewegung 24 zugrunde, die deutlich schneller ist, als die Momentanbewegung 24 im Fall des Sicherheitsbereichs 30.

Aus diesem Grund liegt im Fall des Sicherheitsbereichs 32 eine Überschneidung 34 vor, so dass eine Präventionsreaktion ausgelöst wird.

Das Fahrerassistenzsystem 16 kann hier beispielsweise einen Kreuzungsassistenten umfassen, der eine Geschwindigkeitsreduktion des Fahrzeugs 10 als Präventionsreaktion bewirkt.

### Bezugszeichenliste

- 10: Fahrzeug
- 12: Straßenkreuzung
- 14: weiteres Fahrzeug
- 16: Fahrerassistenzsystem
- 18: Kamera
- 20: Radarsensor
- 22: erkanntes Objekt
- 24: Momentanbewegung
- 26: prädizierte Bewegung
- 28: prädizierte Eigenbewegung
- 30: Sicherheitsbereich
- 32: Sicherheitsbereich
- 34: Überschneidung

## Patentansprüche

1. Verfahren zur Kollisionsprävention eines Fahrzeugs (10), umfassend folgende Schritte:
- Durchführung einer Objekterkennung und Ermittlung einer Momentanbewegung (24) eines erkannten Objekts (22);
- Prädiktion der Bewegung (26) des erkannten Objekts (22) und der Eigenbewegung (28) des Fahrzeugs (10);
- Prüfung der prädizierten Bewegung (26) und prädizierten Eigenbewegung (28) auf Überschneidungen (34); und
- Durchführung einer Präventionsreaktion, wenn eine Überschneidung (34)erkannt wird,
**dadurch gekennzeichnet, dass** ein Sicherheitsbereich (30; 32) zumindest abschnittsweise um das erkannte Objekt (22) herum definiert wird, der als zu dem erkannten Objekt (22) gehörig bei der Prädiktion der Bewegung (26) des erkannten Objekts (22) mit diesem mitbewegt wird, und dass bereits eine Überschneidung (34) der prädizierten Eigenbewegung (28) des Fahrzeugs (10) mit der prädizierten Bewegung (26) des Sicherheitsbereichs (30; 32) die Präventionsreaktion auslöst.

2. Verfahren nach Anspruch 1, **dadurch gekennzeichnet, dass** die Objekterkennung unter Ermittlung einer Ausdehnung des erkannten Objekts (22) erfolgt.

3. Verfahren nach einem der vorhergehenden Ansprüche, **dadurch gekennzeichnet, dass** der Sicherheitsbereich (30; 32) in Abhängigkeit einer Charakteristik der Momentanbewegung (24) des erkannten Objekts (22) definiert wird.

4. Verfahren nach Anspruch 3, **dadurch gekennzeichnet, dass** eine Größe des definierten Sicherheitsbereichs (30; 32) zunimmt, wenn die Momentanbewegung (24) des erkannten Objekts (22) schneller wird.

5. Verfahren nach Anspruch 3 oder 4, **dadurch gekennzeichnet, dass** eine Größe des definierten Sicherheitsbereichs (30; 32) in Abhängigkeit einer Dynamik der Charakteristik der Momentanbewegung (24) des erkannten Objekts (22) verändert wird.

6. Verfahren nach einem der vorhergehenden Ansprüche, **dadurch gekennzeichnet, dass** die Präventionsreaktion ein Element aus folgender Gruppe umfasst: optisches Warnsignal; akustisches Warnsignal; fahrdynamisches Warnsignal; Geschwindigkeitsreduktion; Notbremsung.

7. Fahrerassistenzsystem (16), ausgebildet zur Durchführung eines Verfahrens nach einem der vorhergehenden Ansprüche.

8. Fahrerassistenzsystem (16) nach Anspruch 7, **dadurch gekennzeichnet, dass** das Fahrerassistenzsystem (16) einen Kreuzungsassistenten oder Abbiegeassistenten umfasst.

9. Fahrzeug (10), umfassend ein Fahrerassistenzsystem (16) nach Anspruch 7 oder 8.
